# EUROPEAN PATENT SPECIFICATION

(11) **EP 2 871 441 B1**
(45) Date of publication and mention of the grant of the patent: **02.08.2017**
(21) Application number: 13397538.3
(22) Date of filing: 11.11.2013
(51) Int. Cl.: G01B 11/06

(54) **Method for the determination of a coating thickness**
Verfahren zur Bestimmung einer Beschichtungsdicke
Procédé de détermination d'épaisseur de revêtement

(43) Date of publication of application: 13.05.2015
(73) Proprietor: GVK Coating Technology Oy, 21600 Parainen (FI)
(72) Inventor: Hara, Mika, 21420 Lieto (FI); Hermans, Simon, 60348 Norrköping (SE); Seppinen, Anssi, 21670 Pärnäinen (FI)
(74) Representative: Seppo Laine Oy

(56) References cited:
- DE-A1-102006 052 114
- US-A1- 2003 230 719

## Description

### Field of the invention

The invention is directed to the determination of the thickness of a coating layer on the basis of the hiding power of the coating.

### Background of the invention

"Coating" for the purpose of this disclosure means a substance which is spread in liquid form as a suspension or solution on a substrate and undergoes a drying or hardening process to form a substantially uniform layer on the substrate. Examples are paints, lacquers and membranes used to color, protect or hinder the penetration of water into the substrate.

A number of methods exist for determining the thickness of paints and other coatings. Determinations can be made in the hardened or unhardened state (wet film or dry film). Methods are described e.g. in ISO standard 2808. The thickness of wet films may be determined using calibrated comb or roller devices which are drawn across the substrate and the resulting trace is examined. Cured film thickness may be determined by nondestructive and destructive methods. Nondestructive methods are dependent on the nature of the substrate. On metallic surfaces, magnetic methods can be used; on nonmetallic surfaces, e.g. ultrasonic methods are feasible.

In destructive methods, the dry film is penetrated and the thickness measured from the bore. In special cases, a section can be prepared and the layer thickness determined microscopically.

US2003/0230719 discloses a method of measuring a coating thickness by correlating the amount of infrared energy absorbed in the coating to the thickness of the coating. In German laid-open publication 102006052114, a method is described for determining the thickness of a cured corrosion-protective film of a silane derivative on a metallic substrate. A marker is included in the coating composition, and the amount of marker present is determined by optical or spectroscopic methods. The film thickness can thus be derived.

A simple and reliable method for determining that a sufficiently thick layer of coating has been applied is valuable in e.g. the preparation of water barrier membranes for wet rooms. To ensure proper protection for the underlying materials and prevent water leakage into building structures, water barrier membranes must possess sufficient resistance against water penetration. Such resistance is dependent on the physical properties of the membrane and e.g. freedom from pinholes, which requires usually a minimum thickness of 0,4 mm for liquid applied membranes. Wet room water membrane reliability is a growing issue in view of increasing health concerns related to the exposure to mold toxins. The examination of such coatings with destructive methods is not feasible for obvious reasons, and nondestructive methods may be time-consuming and require expensive equipment.

A relevant property of pigmented coatings is the hiding power (or covering power), i.e. the ability of the coating to make contrasts in the visual appearance of the substrate invisible. Proper assessment of the hiding power of course requires a uniform coating thickness. Hiding power can be measured using standardized, patterned test cards. It can be mathematically described through the Kubelka-Munk theory.

The contrast ratio can be defined as the ratio between the light reflection over a black surface and the light reflection over a white surface. A ratio of > 0.98 can be considered to represent complete covering. ISO standard 6504-3 describes hiding power determination using contrast ratio measurement with white or light paints.

### Summary of the invention

The present invention is a method according to claim 1. According to the present invention, coating thickness determination is based on the hiding power properties of a coating in relation to a standardized reference situated beneath the coating layer. For a given coating having a predetermined hiding power, the reference becomes invisible when the thickness has reached a predetermined minimum value.

The visibility of the reference may be determined by visual inspection or by instrumental measurement using e.g. a spectrophotometer for determining a local contrast ratio.

The existence of the reference markings under coating that makes them visually invisible can be verified with tracer elements in the marking that can be detected with suitable instruments.

The invention is particularly useful when a certain thickness is required to satisfy quality standards in coatings which can be formulated to a corresponding hiding power. Such coatings may be e.g. water barrier membranes and wear and corrosion protective coatings. Using the invention, a sufficient coating thickness can be applied and assessed rapidly in field conditions without further measurement using more sophisticated tools or methods.

### Brief description of the figures

The invention will be described in further detail with reference to the attached drawings, of which
Figure 1 shows the application of a reference on a substrate which is to be covered with a water protecting membrane.
Figure 2 shows a coating applied on a reference.
Figure 3 shows a coating of sufficient thickness applied on a reference.

### Detailed description

According to the invention, at least one area having a standardized contrast is provided on the substrate which is to be coated with the coating of interest. Preferably, such contrast areas are provided in a number sufficient to ensure that the coating has the required thickness over the whole relevant coated area. Contrast areas are provided with a spacing relative to the total surface. Thus, a surface corresponding to an A4 sheet requires a spacing of about 10 cm, while a wall area requires a spacing of about 30 cm.

The colouring in the contrast areas must be adapted to the native colouring of the substrate; i.e. on a light substrate, a dark pattern must be applied and on a dark substrate, a light pattern must be applied. The patterns may be applied using felt pens in appropriate colours. Alternatively, the contrast pattern may be applied with a brush or sponge as a paint that has similar properties to an ink composition.

A set of marker pens with colours providing sufficient contrast on a variety of backgrounds may be provided, the background colours being selected from those being encountered when conventional building materials are used.

The ink composition of the marker pens must be selected to be resistant to the composition of the coating whose thickness is to be determined. For example, the solvents used in the coating must not dissolve the ink composition of the marker pen to prevent marker ink bleeding though the coating.

The reference marker ink or paint can contain elements detectable by means of nondestructive methods, preferably metals such as zinc or heavier. These can be detected with a handheld X-ray fluorescence analyzer through the overlaying coating without destroying it.

According to an embodiment of the invention, the marker pens are felt pens; according to a further embodiment of the invention, the felt pens are of the type leaving a waterproof trace.

Alternatively, pre-coloured test panels may be provided, analogous to those used in hiding power determination. Such test panels must have a thickness which is negligible relative to the final thickness of the coating, and their adhesion to the substrate must be sufficient not to interfere with the adhesion of the final coating as a whole.

The hiding power / opacity of the coating can be tailored to be such that the contrast marking becomes invisible when the film thickness of the wet or uncured coating is at the desired level. Alternatively, the opacity of the coating in its final state is tailored to hide the contrast marking when the film thickness of the dry or cured coating is at the required level.

According to one embodiment of the present invention, the coating whose thickness is to be determined is a water barrier for wet rooms.

According to another embodiment of the invention, the coating whose thickness is to be determined is a corrosion protective coating for metal.

According to another embodiment of the invention, the coating whose thickness is to be determined is a protective coating for wood.

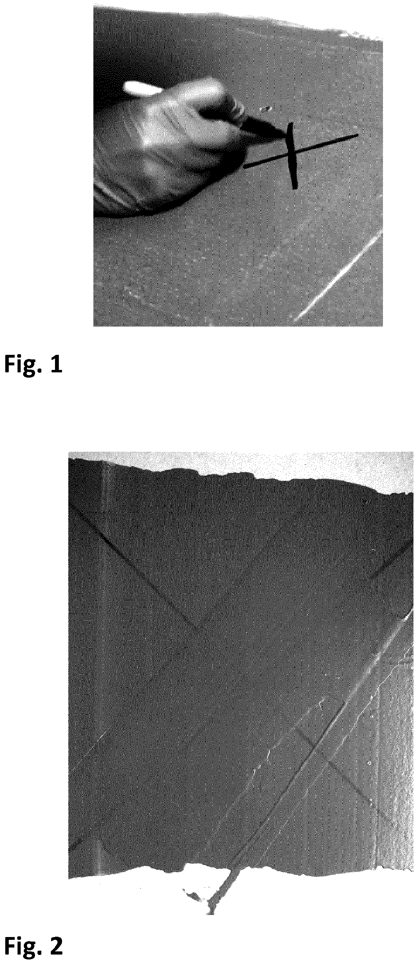

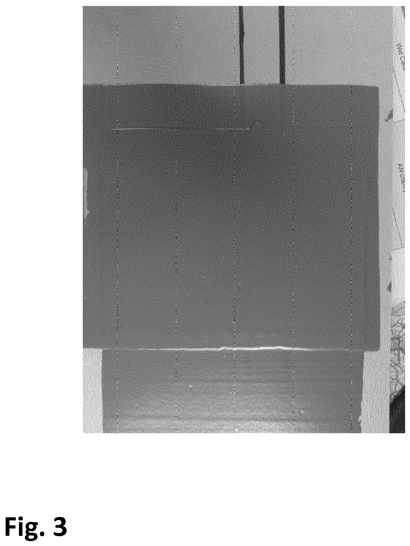

In Fig. 1 is shown the application of a reference to a surface to be coated. Fig. 2 shows the situation when coating has been applied. In the top right hand and low left hand corners, the reference is clearly visible, which means the coating thickness on the reference is not sufficient. In the middle part, the reference barely visible as the coating thickness is close to the predetermined value. Fig. 3 shows a coating whose thickness is equal to or larger than the predetermined value. The reference is not visible through the coating layer.

### Example

A water barrier membrane composition containing styrene butadiene dispersion as binder, water as a solvent and 100 g /kg calcium carbonate as filler, comprising pigment white 6 in a concentration of 4.3 g / kg was applied to a substrate marked with a cross with black waterproof marker that has 1 % zink in the ink composition. The contrast ratio of the substrate background and the marking was 0.38. Coating was applied as 0.5 mm wet film thickness. From the freshly applied film, the contrast marking was invisible. After 2 hour drying the contrast marking became visible. A second layer of coating was applied as 0.5 mm wet film thickness. The contrast marking was no longer visible under wet or dry film. The contrast markings under the membrane were detected with a Bruker S 1 titan XRF-analyzer.

Samples detached and measured physically showed a coating thickness of 0.4 mm which satisfies the specification for the intended use as a waterproof membrane for bathrooms.

## Claims

1. A method for determining the thickness of a coating having a predetermined hiding power, the method comprising the following steps
- providing a substrate
- applying a reference marking to the substrate, the reference marking providing an initial predetermined contrast ratio relative to the substrate
- applying successive layers of coating on the reference marking and the substrate and assessing said contrast ratio until a predetermined final contrast ratio has been obtained, the final contrast ratio being larger than the initial.

2. A method according to claim 1, wherein the reference marking is a marking containing an element detectable with nondestructive methods.

3. A method according to claim 1, wherein the reference marking is a marking made with a felt pen.

4. A method according to claim 1, wherein the reference marking is a test panel.

5. A method according to any of claims 1 to 4, wherein the coating is a water barrier membrane.

## Patentansprüche

1. Verfahren zur Bestimmung der Dicke einer Beschichtung, die eine vorbestimmte Deckkraft hat, wobei das Verfahren die folgenden Schritte umfasst:
- bereitstellen eines Substrats,
- anbringen einer Referenzmarkierung auf dem Substrat, wobei die Referenzenmarkierung ein vorbestimmtes Anfangskontrastverhältnis in Bezug auf das Substrat bildet,
- aufbringen von aufeinanderfolgenden Beschichtungslagen auf der Referenzmarkierung und dem Substrat und auswerten des Kontrastverhältnisses bis ein vorbestimmtes endgültiges Kontrastverhältnis erreicht wurde, wobei das endgültige Kontrastverhältnis größer als das anfängliche ist.

2. Verfahren nach Anspruch 1, wobei die Referenzmarkierung eine Markierung ist, die ein Element enthält, das mit zerstörungsfreien Verfahren detektierbar ist.

3. Verfahren nach Anspruch 1, wobei die Referenzenmarkierung eine Markierung ist, die mit einem Filzstift gemacht wurde.

4. Verfahren nach Anspruch 1, wobei die Referenzmarkierung eine Prüftafel ist.

5. Verfahren nach einem der Ansprüche 1 bis 4, wobei die Beschichtung eine wasserundurchlässige Membran ist.

## Revendications

1. Procédé de détermination de l'épaisseur d'un revêtement présentant un pouvoir masquant prédéterminé, le procédé comprenant les étapes suivantes
- fournir un substrat
- appliquer un marquage de référence sur le substrat, le marquage de référence fournissant un taux de contraste prédéterminé initial par rapport au substrat
- appliquer des couches successives de revêtement sur le marquage de référence et le substrat et évaluer ledit taux de contraste jusqu'à ce qu'un taux de contraste final prédéterminé ait été obtenu, le taux de contraste final étant plus élevé que l'initial.

2. Procédé selon la revendication 1, dans lequel le marquage de référence est un marquage contenant un élément détectable avec des procédés non destructifs.

3. Procédé selon la revendication 1, dans lequel le marquage de référence est un marquage réalisé avec un stylo feutre.

4. Procédé selon la revendication 1, dans lequel le marquage de référence est une éprouvette.

5. Procédé selon l'une quelconque des revendications 1 à 4, dans lequel le revêtement est une membrane pare-eau.
